# EUROPEAN PATENT APPLICATION

(11) **EP 3 889 106 A1**
(43) Date of publication of application: **06.10.2021**
(21) Application number: 20742082.9
(22) Date of filing: 14.01.2020
(51) Int. Cl.: C01B 32/21, C01B 32/05, H01M 4/36, H01M 4/587

(54) **METHOD FOR PREPARING NEGATIVE ELECTRODE ACTIVE MATERIAL**

(30) Priority: 14.01.2019 KR 20190004797
(71) Applicant: LG ENERGY SOLUTION, LTD., Seoul 07335 (KR)
(72) Inventor: LEE, Chang Ju, Daejeon 34122 (KR); WOO, Sang Wook, Daejeon 34122 (KR); JUNG, Dong Sub, Daejeon 34122 (KR); KIM, Hyun Chul, Daejeon 34122 (KR)
(74) Representative: Hoffmann Eitle
(86) International application number: PCT/KR2020/000691
(87) International publication number: WO 2020/149618

(57) **Abstract**

The present invention relates to a method for preparing a negative electrode active material, the method including disposing a pitch on graphite and performing a first heat treatment to form a first carbon coating layer, and disposing a liquid resin on the first carbon coating layer and performing a second heat treatment to form a second carbon coating layer.

## Description

### TECHNICAL FIELD

### Cross-reference to Related Applications

This application claims the benefit of Korean Patent Application No. 10-2019-0004797, filed on January 14, 2019, in the Korean Intellectual Property Office, the disclosure of which is incorporated herein in its entirety by reference.

### Technical Field

The present invention relates to a method for preparing a negative electrode active material, the method including disposing a pitch on graphite and performing a first heat treatment to form a first carbon coating layer, and disposing a liquid resin on the first carbon coating layer and performing a second heat treatment to form a second carbon coating layer.

### BACKGROUND ART

Demands for the use of alternative energy or clean energy are increasing due to the rapid increase in the use of fossil fuel, and as a part of this trend, the most actively studied field is a field of electricity generation and electricity storage using an electrochemical reaction.

Currently, a typical example of an electrochemical device using such electrochemical energy is a secondary battery and the usage areas thereof are increasing more and more. In recent years, as technology development of and demand for portable devices such as portable computers, mobile phones, and cameras have increased, demands for secondary batteries as an energy source have been significantly increased. In general, a secondary battery is composed of a positive electrode, a negative electrode, an electrolyte, and a separator. The negative electrode includes a negative electrode active material for intercalating and de-intercalating lithium ions from the positive electrode, and as the negative electrode active material, a graphite-based active material, for example, natural graphite or artificial graphite may be used.

Meanwhile, due to the development of an electric vehicle and the like, an improvement in rapid charging performance of a secondary battery is becoming an important issue. In order to improve the rapid charging performance of a secondary battery, a technique for coating the surface of graphite with hard carbon has been typically used. However, when the surface of graphite is coated with hard carbon, the specific surface area of an active material is excessively increased when an electrode is roll-pressed, hindering the suppression of the de-intercalation of lithium ions, so that there it is problem in that the high-temperature storage performance of the battery is deteriorated.

Therefore, there is a demand for a novel method capable of simultaneously satisfying rapid charging performance and high-temperature storage performance of a secondary battery when using a graphite-based negative electrode active material.

### DISCLOSURE OF THE INVENTION

### TECHNICAL PROBLEM

An aspect of the present invention is to provide a method for preparing a negative electrode active material capable of simultaneously satisfying rapid charging performance and high-temperature storage performance of a secondary battery during charging/discharging of the battery when using a graphite-based negative electrode active material.

### TECHNICAL SOLUTION

According to an aspect of the present invention, there is provided a method for preparing a negative electrode active material, the method including disposing a pitch on graphite and performing a first heat treatment to form a first carbon coating layer, and disposing a liquid resin on the first carbon coating layer and performing a second heat treatment to form a second carbon coating layer.

### ADVANTAGEOUS EFFECTS

According to the present invention, by disposing a first carbon coating layer derived from a pitch on the surface of graphite, and then disposing a second carbon coating layer derived from a resin on the first carbon coating layer, the specific surface area of a negative electrode active material may be maintained at a proper level, so that the rapid charging performance of a battery may be improved. In addition, an interface between the first carbon coating layer and the second carbon coating layer is predominantly present, thereby suppressing the de-intercalation of lithium ions, so that the high-temperature storage performance of the battery may be improved.

### MODE FOR CARRYING OUT THE INVENTION

Hereinafter, the present invention will be described in more detail to facilitate understanding of the present invention.

It will be understood that words or terms used in the specification and claims shall not be interpreted as having the meaning defined in commonly used dictionaries. It will be further understood that the words or terms should be interpreted as having a meaning that is consistent with their meaning in the context of the relevant art and the technical idea of the invention, based on the principle that an inventor may properly define the meaning of the words or terms to best explain the invention.

The terminology used herein is for the purpose of describing particular exemplary embodiments only and is not intended to be limiting of the present invention. The terms of a singular form may include plural forms unless the context clearly indicates otherwise.

In the present specification, it should be understood that the terms "include," "comprise," or "have" are intended to specify the presence of stated features, numbers, steps, elements, or combinations thereof, but do not preclude the presence or addition of one or more other features, numbers, steps, elements, or combinations thereof.

In the present specification, D₅₀ may be defined as a particle diameter corresponding to 50% of the cumulative volume in the particle size distribution curve of particles. The D₅₀ may be measured by, for example, a laser diffraction method. The laser diffraction method generally enables measurement of a particle diameter from a sub-micron region to several millimeters, so that results of high reproducibility and high resolution may be obtained.

### <Method for preparing negative electrode active material>

A method for preparing a negative electrode active material according to an embodiment of the present invention may include disposing a pitch on graphite and performing a first heat treatment to form a first carbon coating layer, and disposing a liquid resin on the first carbon coating layer and performing a second heat treatment to form a second carbon coating layer.

### (1) Step of disposing pitch on graphite and performing first heat treatment to form first carbon coating layer

The graphite is in the form of particles, and may correspond to a core of the negative electrode active material. The graphite may include at least one selected from the group consisting of natural graphite, artificial graphite, and MesoCarbon MicroBeads (MCMB), and specifically, may be artificial graphite. When the graphite is artificial graphite, the volume expansion of the artificial graphite is relatively small during charging/discharging of a battery and electrolyte side reactions are reduced, so that the lifespan properties of the battery may be improved. However, the graphite is not limited to artificial graphite.

The graphite may have an average particle diameter (D50) of 5 µm to 30 µm, specifically 8 µm to 25 µm, more specifically 9 µm to 22 µm. When the above range is satisfied, the specific surface area is not too large, so that the high-temperature storage performance of the battery may be improved. In addition, since a proper size is maintained, surface area in contact with an electrolyte solution is secured, thereby facilitating the intercalation and de-intercalation of lithium ions, so that the rapid charging performance of the battery may be improved.

The graphite may have at least one shape of shapes of secondary particles formed by assembling flaky cokes, fibrous cokes, mosaic cokes, spherical cokes, needle cokes, or mosaic cokes. In particular, in order to improve the rapid charging performance of the battery and the durability and the lifespan properties of the battery, the graphite is preferably in the form of secondary particles formed by assembling needle cokes or mosaic cokes, and among the above, artificial graphite is preferable.

The needle coke or the mosaic cokes are raw materials of primary particles, and may have an average particle diameter (D50) of 3 µm to 15 µm, specifically 5 to 12 µm. When the above size is satisfied, the specific surface area may be at a proper level, so that the rapid charging performance and the high-temperature storage performance may be improved.

The pitch may be a black carbonaceous solid residue obtained when distilling tar obtained by coal, wood, or dry matters of organic matters. Specifically, the pitch may include at least one of a coal-based pitch and a petroleum-based pitch.

If the first carbon coating layer is formed with a resin rather than a pitch on graphite, the first carbon coating layer and the second carbon coating layer are both formed with a resin, so that an interface between the first carbon coating layer and the second carbon coating layer may not be predominantly formed. Accordingly, since the de-intercalation of lithium ions which have been intercalated in the graphite is not effectively suppressed, so that it may be difficult to improve the high-temperature storage performance of the battery. On the other hand, when the first carbon coating layer is formed through the pitch, an interface is predominantly formed between the first carbon coating layer and the second carbon coating layer so that the de-intercalation of the lithium ions may be effectively suppressed, so that the high-temperature storage performance of the battery may be improved.

The temperature for the first heat treatment may be 500°C to 2000°C, specifically 900°C to 1500°C, more specifically 1000°C to 1300°C. When the above range is satisfied, the amount of hydrogen in the first carbon coating layer is suppressed so that the reaction between lithium ions and hydrogen may be reduced, and the crystallinity of graphite is not excessively increased so that the rapid charging performance may be improved.

The weight ratio of the graphite and the first carbon coating layer may be 1.0000:0.0052 to 1.0000:0.0474, specifically 1.0000:0.0103 to 1.0000:0.0421, more specifically 1.0000:0.0155 to 1.0000:0.0211. When the above range is satisfied, while the capacity per weight of the negative electrode active material is maintained at a proper level, the transfer resistance of charges is reduced, so that the rapid charging performance of the battery may be improved.

The first carbon coating layer may be in contact with the surface of the graphite. The first carbon coating layer may cover at least a portion of the surface of the graphite, specifically the entire surface thereof.

### (2) Step of disposing liquid resin on first carbon coating layer and performing second heat treatment to form second carbon coating layer

The liquid resin may be an amorphous liquid matter composed of an organic compound and a derivative thereof. Specifically, the resin may include at least one selected from the group consisting of an epoxy resin, a urethane resin, and a phenol resin. If the second carbon coating layer is formed on the first carbon coating layer using a pitch rather than a resin, the specific surface area of the negative electrode active material is not sufficient, so that the rapid charging performance of the battery may be deteriorated. Also, since both of the first carbon coating layer and the second carbon coating layer are formed using a pith, an interface between the first carbon coating layer and the second carbon coating layer is not predominantly formed. Therefore, the de-intercalation of lithium ions is not suppressed, so that the high-temperature storage performance of the battery is deteriorated.

On the other hand, when the second carbon coating layer is formed through the resin, the second carbon coating layer is located on the surface of the negative electrode active material, so that the specific surface area of the negative electrode active material is increased to a desired level to improve the rapid charging performance of the battery. In addition, an interface is formed to be predominantly formed between the first carbon coating layer formed through the pitch and the second carbon coating layer formed with the liquid resin to suppress the de-intercalation of lithium ions, so that the high-temperature storage performance of the battery may be improved.

The temperature for the second heat treatment may be 500°C to 2000°C, specifically 900°C to 1500°C, more specifically 1000°C to 1300°C. When the above range is satisfied, the amount of hydrogen in the second carbon coating layer is suppressed, so that the reaction between lithium ions and the hydrogen may be reduced.

The weight ratio of the graphite and the second carbon coating layer may be 1.0000:0.0052 to 1.0000:0.0474, specifically 1.0000:0.0103 to 1.0000:0.0421, more specifically 1.0000:0.0155 to 1.0000:0.0200. When the above range is satisfied, while the capacity per weight of the negative electrode active material is maintained at a proper level, the transfer resistance of charges is reduced, so that the rapid charging performance of the battery may be improved.

The second carbon coating layer may be in contact with the first carbon coating layer. The second carbon coating layer may cover at least a portion of the surface of the first carbon coating layer, specifically the entire surface thereof.

Since the second carbon coating layer is formed with a resin, the graphite and the first carbon coating layer may be uniformly coated. Accordingly, the rapid charging performance of the battery may be improved. In addition, due to the interface between the first carbon coating layer and the second carbon coating layer, unnecessary de-intercalation of lithium ions is prevented, so that the high-temperature storage performance of the battery may be improved.

The weight ratio of the first carbon coating layer and the second carbon coating layer may be 10:90 to 90:10, specifically 15:85 to 85:15, more specifically 40:60 to 60:40. When the above range is satisfied, the rapid charging performance and the high-temperature storage performance of the battery may be further improved.

### <Negative electrode active material>

A negative electrode active material may be a negative electrode active material prepared by the method for preparing a negative electrode active material of the embodiment described above. Specifically, the negative electrode active material includes graphite, a first carbon coating layer disposed on the graphite, and a second carbon coating layer disposed on the first carbon coating layer, wherein the first carbon coating layer was formed by subjecting a pitch to a first heat treatment and the second carbon coating layer was formed by subjecting a liquid resin to a second heat treatment. The graphite, the first carbon coating layer, the second carbon coating layer, the pitch, the liquid resin are the same as those described in the embodiment described above, and thus, descriptions thereof are omitted.

### <Negative electrode>

A negative electrode according to yet another embodiment of the present invention may include a negative electrode active material layer including a negative electrode active material. Specifically, the negative electrode may include a current collector and a negative electrode active material layer disposed on the current collector.

The current collector is not particularly limited as long as it has conductivity without causing a chemical change in a battery. For example, as the current collector, copper, stainless steel, aluminum, nickel, titanium, fired carbon, or aluminum or stainless steel that is surface-treated with one of carbon, nickel, titanium, silver, and the like may be used. Specifically, a transition metal which adsorbs carbon such as copper and nickel well may be used as the current collector. The thickness of the current collector may be from 6 µm to 20 µm, but the thickness of the current collector is not limited thereto.

The negative electrode active material layer may be disposed on the current collector. The negative electrode active material layer may be disposed on at least one surface of the current collector, specifically on one surface or both surfaces thereof.

The negative electrode active material layer may include a negative electrode active material. The negative electrode active material may be a negative electrode active material prepared by the method for preparing a negative electrode active material of the embodiment described above.

The negative electrode may further include at least one of a binder and a conductive material.

The binder may include at least any one selected from the group consisting of a polyvinylidene fluoride-hexafluoropropylene copolymer (PVDF-co-HFP), polyvinylidenefluoride, polyacrylonitrile, polymethylmethacrylate, polyvinyl alcohol, carboxymethyl cellulose (CMC), starch, hydroxypropyl cellulose, regenerated cellulose, polyvinylpyrrolidone, polytetrafluoroethylene, polyethylene, polypropylene, polyacrylic acid, an ethylene-propylene-diene monomer (EPDM), a sulfonated EPDM, styrene-butadiene rubber (SBR), fluorine rubber, polyacrylic acid, materials having the hydrogen thereof substituted with Li, Na, or Ca, and the like, and a combination thereof. In addition, the binder may include various copolymers thereof.

The conductive material is not particularly limited as long as it has conductivity without causing a chemical change in the battery. For example, graphite such as natural graphite or artificial graphite; a carbon-based material such as carbon black, acetylene black, Ketjen black, channel black, furnace black, lamp black, and thermal black; conductive fiber such as carbon fiber and metal fiber; a conductive tube such as a carbon nanotube; fluorocarbon powder; metal powder such as aluminum powder, and nickel powder; a conductive whisker such as zinc oxide and potassium titanate; a conductive metal oxide such as titanium oxide; a conductive material such as a polyphenylene derivative, and the like may be used.

### <Secondary battery>

A secondary battery according to yet another embodiment of the present invention may include a negative electrode, and the negative electrode may be the same as the negative electrode of the embodiment described above.

Specifically, the secondary battery may include the negative electrode, a positive electrode, a separator interposed between the positive electrode and the negative electrode, and an electrolyte. The negative electrode is the same as the negative electrode described above. Since the negative electrode has been described above, a detailed description thereof will be omitted.

The positive electrode may include a positive electrode current collector, and a positive electrode active material layer formed on the positive electrode current collector and including the positive electrode active material.

In the positive electrode, the positive electrode current collector is not particularly limited as long as it has conductivity without causing a chemical change in the battery. For example, stainless steel, aluminum, nickel, titanium, fired carbon, or aluminum or stainless steel that is surface-treated with one of carbon, nickel, titanium, silver, and the like may be used. Also, the positive electrode current collector may typically have a thickness of 3 µm to 500 µm, and microscopic irregularities may be formed on the surface of the positive electrode current collector to improve the adhesion of the positive electrode active material. For example, the positive electrode current collector may be used in various forms such as a film, a sheet, a foil, a net, a porous body, a foam, and a non-woven body.

The positive electrode active material may be a positive electrode active material commonly used in the art. Specifically, the positive electrode active material may be a layered compound such as a lithium cobalt oxide (LiCoO₂) and a lithium nickel oxide (LiNiO₂), or a compound substituted with one or more transition metals; a lithium iron oxide such as LiFe₃O₄; a lithium manganese oxide such as Li_{1+c1}Mn_{2-c1}O₄ (0≤c1≤0.33), LiMnO₃, LiMn₂O₃, and LiMnO₂; lithium copper oxide (Li₂CuO₂); a vanadium oxide such as LiV₃O₈, V₂O₅, and Cu₂V₂O₇; a Ni-site type lithium nickel oxide represented by the formula LiNi_{1-c2}M_{c2}O₂ (wherein M is any one of Co, Mn, Al, Cu, Fe, Mg, B or Ga, and 0.01≤c2≤0.3); a lithium manganese composite oxide represented by the formula LiMn_{2-c3}M_{c3}O₂ (wherein, M is any one of Co, Ni, Fe, Cr, Zn, or Ta, and 0.01≤c3≤0.1), or by the formula Li₂Mn₃MO₈ (wherein, M is any one of Fe, Co, Ni, Cu, or Zn); LiMn₂O₄ having a part of Li in the formula substituted with an alkaline earth metal ion, and the like, but is not limited thereto. The positive electrode may be a Li-metal.

The positive electrode active material layer may include a positive electrode conductive material and a positive electrode binder, together with the positive electrode active material described above.

At this time, the positive electrode conductive material is used to impart conductivity to an electrode, and any positive electrode conductive material may be used without particular limitation as long as it has electronic conductivity without causing a chemical change in a battery to be constituted. Specific examples thereof may include graphite such as natural graphite or artificial graphite; a carbon-based material such as carbon black, acetylene black, Ketjen black, channel black, furnace black, lamp black, thermal black, and carbon fiber; metal powder or metal fiber of such as copper, nickel, aluminum, and silver; a conductive whisker such as a zinc oxide whisker and a potassium titanate whisker; a conductive metal oxide such as titanium oxide; or a conductive polymer such as a polyphenylene derivative, and any one thereof or a mixture of two or more thereof may be used.

In addition, the positive electrode binder serves to improve the bonding between positive electrode active material particles and the adhesion between the positive electrode active material and the positive electrode current collector. Specific examples thereof may include polyvinylidene fluoride (PVDF), a polyvinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene monomer (EPDM), a sulfonated EPDM, styrene-butadiene rubber (SBR), fluorine rubber, or various copolymers thereof, and any one thereof or a mixture of two or more thereof may be used.

The separator is to separate the negative electrode and the positive electrode and to provide a movement path for lithium ions. Any separator may be used without particular limitation as long as it is a separator commonly used in a secondary battery. Particularly, a separator having excellent moisture-retention of an electrolyte as well as low resistance to ion movement in the electrolyte is preferable. Specifically, a porous polymer film, for example, a porous polymer film manufactured using a polyolefin-based polymer such as an ethylene homopolymer, a propylene homopolymer, an ethylene/butene copolymer, an ethylene/hexene copolymer, and an ethylene/methacrylate copolymer, or a laminated structure having two or more layers thereof may be used. Also, a typical porous non-woven fabric, for example, a non-woven fabric formed of glass fiber having a high melting point, or polyethylene terephthalate fiber, and the like may be used as the separator. Also, a coated separator including a ceramic component or a polymer material may be used to secure heat resistance or mechanical strength, and may be selectively used having a single layered or a multi-layered structure.

The electrolyte may be an organic liquid electrolyte, an inorganic liquid electrolyte, a solid polymer electrolyte, a gel-type polymer electrolyte, a solid inorganic electrolyte, a molten-type inorganic electrolyte, and the like, which may be used in the preparation of a lithium secondary battery, but is not limited thereto.

Specifically, the electrolyte may include a non-aqueous organic solvent and a lithium salt.

As the non-aqueous organic solvent, for example, an aprotic organic solvent, such as N-methyl-2-pyrrolidone, propylene carbonate, ethylene carbonate, butylene carbonate, dimethyl carbonate, diethyl carbonate, γ-butyrolactone, 1,2-dimethoxy ethane, tetrahydrofuran, 2-methyl tetrahydrofuran, dimethyl sulfoxide, 1,3-dioxolane, formamide, diemthylformamide, dioxolane, acetonitrile, nitromethane, methyl formate, methyl acetate, phosphate triester, trimethoxy methane, a dioxolane derivative, sulfolane, methyl sulfolane, 1,3-dimethyl-2-imidazolidinone, a propylene carbonate derivative, a tetrahydrofuran derivative, ether, methyl propionate, and ethyl propionate may be used.

In particular, among the carbonate-based organic solvents, cyclic carbonates ethylene carbonate and propylene carbonate may be preferably used since they are organic solvents of a high viscosity having high permittivity to dissociate a lithium salt well. Furthermore, when such a cyclic carbonateis mixed with a linear carbonate of a low viscosity and low permittivity such as dimethyl carbonate and diethyl carbonate in an appropriate ratio, it is possible to prepare an electrolyte having a high electric conductivity, such that the electrolyte may be more preferably used.

As the metal salt, a lithium salt may be used. The lithium salt is a material which is easily dissolved in the non-aqueous electrolyte. For example, as an anion of the lithium salt, one or more selected from the group consisting of F⁻, Cl⁻, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻, and (CF₃CF₂SO₂)₂N⁻ may be used.

In the electrolyte, in order to improve the lifespan properties of a battery, to suppress the decrease in battery capacity, and to improve the discharge capacity of the battery, one or more additives, for example, a halo-alkylene carbonate-based compound such as difluoroethylene carbonate, pyridine, triethylphosphite, triethanolamine, cyclic ether, ethylenediamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, and the like may be further included other than the above electrolyte components.

According to yet another embodiment of the present invention, a battery module including the secondary battery as a unit cell, and a battery pack including the same are provided. The battery module and the battery pack include the secondary battery which has high capacity, high rate properties, and cycle properties, and thus, may be used as a power source of a medium-and-large sized device selected from the group consisting of an electric car, a hybrid electric vehicle, a plug-in hybrid electric vehicle, and a power storage system.

Hereinafter, preferred embodiments of the present invention will be described in detail to facilitate understanding of the present invention. However, the embodiments are merely illustrative of the present invention, and thus, it will be apparent to those skilled in the art that various modifications and variations can be made without departing from the scope and spirit of the present invention as disclosed in the accompanying claims. It is obvious that such variations and modifications fall within the scope of the appended claims.

### Examples and Comparative Examples

### Example 1: Preparation of negative electrode active material

### (1) Forming first carbon coating layer

Needle cokes having an average particle diameter (D₅₀) of 8 µm were mixed with a pitch, and then the mixture was subject to assembly, followed by a heat treatment to prepare artificial graphite in a secondary particle form having an average particle diameter (D₅₀) of 17 µm, which was used as a core. The core and a petroleum-based solid pitch were mixed, and then the mixture was placed into a carbonization furnace so as to be subjected to a heat treatment at 1300°C to form a first carbon coating layer on the core. The weight ratio of the core and the first carbon coating layer was 1:0.0155.

### (2) Forming second carbon coating layer

The core on which the first carbon coating layer was formed and a liquid phenol resin were mixed, and then the mixture was placed into a carbonization furnace so as to be subjected to a heat treatment at 1300°C to form a second carbon coating layer on the core. The weight ratio of the core and the second carbon coating layer was 1:0.0155 (core:first carbon coating layer:second carbon coating layer = 97:1.5:1.5 weight ratio). Through the above, a negative electrode active material was finally obtained.

### Example 2: Preparation of negative electrode active material

### (1) Forming first carbon coating layer

A first carbon coating layer was formed in the same manner as in Example 1 except that the weight ratio of the core and the first carbon coating layer was 1:0.0316.

### (2) Forming second carbon coating layer

A second carbon coating layer was formed in the same manner as in Example 1 except that the weight ratio of the core and the second carbon coating layer was 1:0.0211. Through the above, a negative electrode active material was finally obtained (core:first carbon coating layer:second carbon coating layer = 95:3:2 weight ratio).

### Comparative Example 1: Preparation of negative electrode active material

Needle cokes having an average diameter (D₅₀) of 8 µm were mixed with a pitch, and then the mixture was subject to assembly, followed by a heat treatment to prepare artificial graphite in a secondary particle form having an average diameter (D₅₀) of 17 µm, which was used as a core. The core and a petroleum-based solid pitch were mixed, and then the mixture was placed into a carbonization furnace so as to be subjected to a heat treatment at 1300°C to form a carbon coating layer on the core. The weight ratio of the core and the carbon coating layer was 1:0.0309.

### Comparative Example 2: Preparation of negative electrode active material

Needle cokes having an average diameter (D₅₀) of 8 µm were mixed with a pitch, and then the mixture was subject to assembly, followed by a heat treatment to prepare artificial graphite in a secondary particle form having an average diameter (D₅₀) of 17 µm, which was used as a core. The core and a liquid phenol resin were mixed, and then the mixture was placed into a carbonization furnace so as to be subjected to a heat treatment at 1300°C to form a carbon coating layer on the core. The weight ratio of the core and the carbon coating layer was 1:0.0309.

### Comparative Example 3: Preparation of negative electrode active material

Needle cokes having an average particle diameter (D₅₀) of 8 µm were mixed with a pitch, and then the mixture was subject to assembly, followed by a heat treatment to prepare artificial graphite in a secondary particle form having an average particle diameter (D₅₀) of 17 µm, which was used as a core. The core, a petroleum-based solid pitch, and a liquid phenol resin were mixed, and then the mixture was placed into a carbonization furnace so as to be subjected to a heat treatment at 1300°C to form a carbon coating layer on the core. The weight ratio of the core and the carbon coating layer was 1:0.0309. The weight ratio of the petroleum-based pitch and the phenol resin which were used was 2:1.

### Comparative Example 4: Preparation of negative electrode active material

### (1) Forming first carbon coating layer

Needle cokes having an average particle diameter (D₅₀) of 8 µm were mixed with a pitch, and then the mixture was subject to assembly, followed by a heat treatment to prepare artificial graphite in a secondary particle form having an average particle diameter (D₅₀) of 17 µm, which was used as a core. The core and a liquid phenol resin were mixed, and then the mixture was placed into a carbonization furnace so as to be subjected to a heat treatment at 1300°C to form a first carbon coating layer on the core. The weight ratio of the core and the first carbon coating layer was 1:0.0103.

### (2) Forming second carbon coating layer

The core on which the first carbon coating layer was formed and a petroleum-based pitch were mixed, and then the mixture was placed into a carbonization furnace so as to be subjected to a heat treatment at 1300°C to form a second carbon coating layer on the core. The weight ratio of the core and the second carbon coating layer was 1:0.0206 (core:first carbon coating layer:second carbon coating layer = 97:1:2 weight ratio). Through the above, a negative electrode active material was finally obtained.

### Experimental Example

Each electrode was manufactured in the following manner using the negative electrode active material of each of Examples 1 and 2 and Comparative Examples 1 to 4, and each electrode was evaluated for discharge capacity, initial efficiency, rapid charging performance, and high-temperature storage performance.

The negative electrode active material (the negative electrode active material of each of Examples 1 and 2 and Comparative Examples 1 to 4), Super C65 as a conductive material, styrene butadiene rubber(SBR) as a binder, and carboxymethylcellulose (CMC) as a thickening agent were mixed in a weight ratio of 95.3:1:2.5:1.2, and then added with water to prepare a negative electrode slurry. The negative electrode slurry was applied on a copper foil (current collector) at a loading amount of 3.6 mAh/cm² and then roll-pressed such that the density of a negative electrode active material layer becomes 1.6 g/cc, followed by vacuum drying at about 130°C for 8 hours to manufacture a negative electrode of Example 1.

(1) Experiment Example 1: Evaluation of discharge capacity, initial efficiency, and rapid charging performance.

A lithium (Li) metal thin film cut into a circular shape of 1.7671 cm² was prepared as a positive electrode. A porous polyethylene separator was interposed between the positive electrode and the negative electrode, and then an electrolyte, in which vinylene carbonate was dissolved in 0.5 wt% into a mixed solution in which methyl ethyl carbonate (EMC) and ethylene carbonate (EC) are mixed at a mixing volume ratio of 7:3 and LiPF₆ of 1.0 M concentration was dissolved, was injected. Thereafter, it is left to stand for 24 hours to manufacture a lithium coin half-cell.

The manufactured half-cell was charged under the conditions of CC/CV mode and 0.005 C cut-off at 0.005 V with a current of 0.1 C and discharged under the conditions of CC mode and 1.5 V cut off at a current of 0.1 C. The above was performed for three times, and then the initial efficiency was evaluated at the first cycle, and the discharge capacity was evaluated at the third cycle.

After the third cycle, the output voltage graph by SOC was derived while charging the half-cell to SOC 75% with a current of 3.0 C. The X-axis shows SOC and the Y-axis shows the measured output voltage in the graph, and using a method for determining Li plating SOC by locating a slope change point (point at which lithium starts to be precipitated) through a dV/dQ derivative, the rapid charging performance was evaluated.

### (2) Experiment Example 3: Evaluation of high-temperature storage performance

As the positive electrode active material, Li[Ni_{0.6}Mn_{0.2}Co_{0.2}]O₂ was used. The positive electrode active material, carbon black which is a conductive material, polyvinylidene fluoride (PVDF) which is a binder were mixed at a weight ratio of 94:4:2 to N-methyl-2-pyrrolidone (NMP) which is a solvent to prepare a positive electrode slurry.

The prepared positive electrode slurry was applied on an aluminum metal thin film having a thickness of 15 µm, which is a positive electrode current collector, and then dried. At this time, the temperature of circulated air was 110°C. Thereafter, the aluminum metal thin film applied with the positive electrode slurry and then dried was roll-pressed, and then dried in a vacuum oven of 130°C for 2 hours to manufacture a positive electrode including a positive electrode active material layer.

The negative electrode (the negative electrode of each of Examples 1 and Comparative Examples 1 to 4), the manufactured positive electrode, and a porous polyethylene separator were assembled by a stacking method, and the assembled battery was injected with an electrolyte solution (ethylene carbonate (EC)/ethyl methyl carbonate (EMC)=1/2 (volume ratio) and lithium hexa fluoro phosphate (1 M of LiPF₆)) to manufacture a lithium secondary battery.

After activating the cell by charging the cell to SOC 30% with a current of 0.2 C, charging in a CC/CV mode (4.2 V, 0.05 C cut-off) and discharging in a CC mode (0.2 C current, 3.0 V cut-off) were performed for 3 times. Thereafter, the secondary battery was fully charged with a current of 0.2 C, and then the remaining capacity thereof after 1 week, 2 weeks, and 4 weeks were evaluated while storing the battery at 60°C. Table 1 lists the remaining capacity after 4 weeks' storage. [Table 1]

| | Discharge capacity (mAh/g) | Initial efficiency (%) | Rapid charging (SOC %) | High-temperatur e storage (%) |
|---|---|---|---|---|
| Example 1 | 352 | 93.2 | 45 | 93.8 |
| Example 2 | 350 | 92.9 | 49 | 93.3 |
| Comparative Example 1 | 351 | 93.0 | 34 | 93.4 |
| Comparative Example 2 | 352 | 90.0 | 45 | 79.9 |
| Comparative Example 3 | 351 | 91.4 | 39 | 86.7 |
| Comparative Example 4 | 352 | 93.1 | 36 | 93.6 |

Referring to Table 1, it can be seen that when the negative electrode active material of each of Example 1 and Example 2 in which the first carbon coating layer was formed through a pitch and the second carbon coating layer was formed through a resin was used, lithium was precipitated later, so that the rapid charging performance was excellent and the high-temperature storage performance was also excellent.

On the other hand, since Comparative Example 1 was coated with only the pitch, the specific surface area was reduced, so that the rapid charging performance was poor (the content of the carbon coating layer was higher than that of Example 2, so that the high-temperature storage performance was excellent). Since Comparative Example 2 was coated with only the resin, the rapid charging performance was excellent. However, the de-intercalation of lithium ions was not prevented, so that the high-temperature storage performance was low. Since Comparative Example 3 was coated with a mixture of the pitch and the resin, there was no interface present, so that the high-temperature storage performance was low, and the specific surface area was reduced overall, so that the rapid charging performance was poor. In the case of Comparative Example 4, there was an interface present, so that the high-temperature storage performance was excellent. However, the resin was not present on the surface of the negative electrode active material, thereby reducing the specific surface area, so that the rapid charging performance was poor.

## Claims

1. A method for preparing a negative electrode active material, the method comprising:
disposing a pitch on graphite and performing a first heat treatment to form a first carbon coating layer; and
disposing a liquid resin on the first carbon coating layer and performing a second heat treatment to form a second carbon coating layer.

2. The method of claim 1, wherein the graphite comprises at least one selected from the group consisting of natural graphite, artificial graphite, and MCMB.

3. The method of claim 1, wherein the average particle diameter (D₅₀) of the graphite is 5 µm to 30 µm.

4. The method of claim 1, wherein the pitch comprises at least one of a coal-based pitch and a petroleum-based pitch.

5. The method of claim 1, wherein the weight ratio of the graphite and the first carbon coating layer is 1.0000:0.0052 to 1.0000:0.0474.

6. The method of claim 1, wherein the temperature for the first heat treatment is 500°C to 2000°C.

7. The method of claim 1, wherein the resin comprises at 1 east one selected from the group consisting of an epoxy resin , a urethane resin, and a phenol resin.

8. The method of claim 1, wherein the temperature for the second heat treatment is 500°C to 2000°C.

9. The method of claim 1, wherein the weight ratio of the graphite and the second carbon coating layer is 1.0000:0.0052 to 1.0000:0.0474.

10. The method of claim 1, wherein the weight ratio of the first carbon coating layer and the second carbon coating layer is 10:90 to 90:10.

11. The method of claim 1, wherein the second carbon coating layer is in contact with the first carbon coating layer.
